(19) Europäisches Patentamt
European Patent Office
Office européen des brevets

(11) **EP 3 554 849 B1**

(12) **EUROPEAN PATENT SPECIFICATION**

(45) Date of publication and mention
of the grant of the patent:
**01.09.2021  Bulletin 2021/35**

(21) Application number: **17821768.3**

(22) Date of filing: **11.12.2017**

(51) Int Cl.:
**B60C 1/00** $^{(2006.01)}$

(86) International application number:
**PCT/US2017/065613**

(87) International publication number:
**WO 2018/111773 (21.06.2018 Gazette 2018/25)**

(54) **TIRE SIDEWALL SUPPORT FOR RUNFLAT TIRE**

REIFENSEITENWANDUNTERSTÜTZUNG FÜR RUNFLATREIFEN

SUPPORT DE FLANC DU PNEU POUR PNEUMATIQUE À AFFAISSEMENT LIMITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.12.2016  PCT/US2016/066895**

(43) Date of publication of application:
**23.10.2019  Bulletin 2019/43**

(73) Proprietor: **Compagnie Générale des
Etablissements Michelin
63000 Clermont-Ferrand (FR)**

(72) Inventors:
• **YANG, Xiaofeng, Shaw
  Greenville, SC 29605 (US)**
• **CHEKANOV, Yuri, Anatolyevich
  Greenville, SC 29605 (US)**

(74) Representative: **Casalonga
Casalonga & Partners
Bayerstraße 71/73
80335 München (DE)**

(56) References cited:
**EP-A2- 0 842 795     WO-A1-2008/079107**

## Description

### BACKGROUND OF THE INVENTION

#### Field of the Invention

This invention relates generally to run flat tires and more particularly, to rubber compositions for the side support and/or bead apex of run flat tires.

#### Description of the Related Art

Tire manufacturers have been developing solutions for how passengers in vehicles having pneumatic tires can continue on their journey for at least some minimum distance upon a tire losing all or substantially all of its pressure. While spare tires are one solution for such a problem, a better solution would allow the passengers to continue without having to get out of their vehicle until reaching a safe destination.

The idea of extended mobility allows a vehicle to continue to drive along on a tire that has lost all or substantially all of its inflation for at least a reasonable distance. Such tires, based on run-flat technology, often include a self-supporting feature that allows the tires to support a significant load at reduced pressure or even no pressure. Such self-supporting feature may include a tire sidewall that is reinforced with rubber inserts as shown, for example, in US Patent No. 6,022,434, which is hereby fully incorporated by reference.

Because the rubber inserts have to be able to support the load of the vehicle at a reduced or no inflation pressure, these inserts are often quite thick and they typically impact the rolling resistance characteristics of the tire. Researchers in the tire industry are searching for new materials and new designs for such sidewall supports to improve the rolling resistance of such tires and their durability when operated under no or little pressure.

### SUMMARY OF THE INVENTION

Particular embodiments of the present invention include rubber compositions and articles such as tires and tire components made therefrom, especially sidewall supports for run-flat tires and the bead apex. Some embodiments include a run-flat tire having a sidewall support and a bead apex, the sidewall support and/or the bead apex manufactured from a rubber composition that is based upon a cross-linkable rubber composition, the cross-linkable rubber composition comprising a rubber component selected from the group consisting of a polybutadiene and at least one of a natural rubber and a polyisoprene.

Such rubber compositions may further include a carbon black and also include a sulfur curing agent and a peroxide curing agent.

The foregoing and other objects, features and advantages of the invention will be apparent from the following more detailed descriptions of particular embodiments of the invention.

### DETAILED DESCRIPTION OF PARTICULAR EMBODIMENTS

Particular embodiments of the present invention include tire components manufactured from the rubber compositions that are disclosed herein. The rubber compositions include components found on a run-flat tire, namely the sidewall support and the apex, which is located in the bead area of the tire. Such rubber compositions may be useful for both the apex and the sidewall support of run-flat tires in many embodiments but in other embodiments, such rubber compositions may be limited to just the bead apex or just the sidewall support.

It has been found that by curing the disclosed rubber compositions with both a peroxide curing agent and a sulfur curing agent that the physical properties of the tire component are much improved. In particular it was found that when a test specimen was subjected to compression flexing in accordance with the ASTM D-623 test method that the change in the length of the test specimen was much less when the rubber composition was cured with the two curing agents than when the test specimen was just cured with sulfur. This demonstrates that tire components made from such rubber compositions as disclosed herein can operate for a longer distance and/or at a higher temperature without failing, which are important characteristics for rubber compositions that are suitable for forming the sidewall supports of run-flat tires.

As used herein, "phr" is "parts per hundred parts of rubber by weight" and is a common measurement in the art wherein components of a rubber composition are measured relative to the total weight of rubber in the composition, *i.e.,* parts by weight of the component per 100 parts by weight of the total rubber(s) in the composition.

As used herein, elastomer and rubber are synonymous terms.

As used herein, "based upon" is a term recognizing that embodiments of the present invention are made of vulcanized or cured rubber compositions that were, at the time of their assembly, uncured. The cured rubber composition is therefore "based upon" the uncured rubber composition. In other words, the cross-linked rubber composition is based upon or comprises the constituents of the cross-linkable rubber composition.

Reference will now be made in detail to embodiments of the invention. Each example is provided by way of explanation of the invention. For example, features illustrated or described as part of one embodiment can be used with another embodiment to yield still a third embodiment. It is intended that the present invention include these and other modifications and variations.

Use of sidewall supports in the sidewalls of tires designed to run for a reasonable distance under low or no-inflation pressure, *i.e.,* run-flat tires, are well known in the industry. Often these sidewall supports are crescent-shaped and they are designed to allow the run-flat tire to support the load of the vehicle for a reasonable distance so that the car can reach a safer location for changing and/or inflating the tire.

It is recognized that the size, thickness and other dimensions of such sidewall supports may vary based, *inter alia,* on the size and type of the tire and the load that the tire needs to support while in the run-flat condition. It is recognized that one having ordinary skill in the field of tire design can provide a run-flat tire having the sidewall supports manufactured with the materials disclosed herein.

The bead section of the tire is known to be that section that includes the beads. The beads are typically bands of high tensile strength material, such as steel wire, coated with a rubber compound. They are inflexible and inelastic and provide the mechanical strength to fit the tire to the wheel and anchor the tire cords or plies.

The apex - or bead filler - is known as the typically triangular shaped profile adjacent to the beads that provides cushion between the rigid bead and the flexible inner liner and body ply assembly. It is typically manufactured from a harder material than found in most other sections of a tire. It is recognized that one having ordinary skill in the field of tire design can provide a run-flat tire having the bead apex manufactured with the materials disclosed herein.

The rubber compositions disclosed herein that are suitable for the manufacture of a run-flat tire sidewall support and/or apex and are cured with both a peroxide curing agent and a sulfur curing agent. Such rubber compositions include a rubber component selected from the group consisting of a polybutadiene, a natural rubber, a polyisoprene and combinations thereof.

Polybutadiene rubber is a well-known rubber that is made by polymerizing the 1,3-butadiene monomer. Because of the two double bonds present in the butadiene monomer, the resulting polybutadiene may include three different forms: *cis*-1,4, *trans*-1,4 and *vinyl*-1,2 polybutadiene. The *cis*-1,4 and *trans*-1,4 elastomers are formed by the monomers connecting end-to-end while the *vinyl*-1,2 elastomer is formed by the monomers connecting between the ends of the monomer.

It is preferable - but not required in some embodiments of the disclosed rubber compositions - that the polybutadiene rubber used for the manufacture of the apex and/or sidewall insert be characterized as one having a high *cis*-1,4 content. Therefore, in particular embodiments the polybutadiene may be characterized as having a *cis*-1,4 content of at least 80 % or at least 90 % or alternatively, between 80 % and 99.8 %, between 90 % and 99.8 % or between 92% and 99.8 %. Such polybutadienes are well known in the industry.

In particular embodiments it may be useful - but again not required in some embodiments of the disclosed rubber compositions - that the polybutadiene be characterized as having a high Mooney viscosity. A polybutadiene that is characterized as having a high Mooney viscosity is typically one having a higher molecular weight and therefore, Mooney viscosity is somewhat an indicator of the relative molecular weight of the polybutadienes; *i.e.,* the higher the Mooney viscosity, the higher the molecular weight. Mooney viscosity is measured in Mooney units, which is an arbitrary unit used to measure the viscosity of unvulcanized rubber. The measurement is taken in a Mooney viscometer, as well known to one skilled in the art, in accordance with the standard ASTM D-1646. All the Mooney viscosities disclosed herein are measured at 100 °C

For those embodiments that utilize a high Mooney viscosity (in Mooney units measured at 100 °C) polybutadiene, the Mooney may be between 55 Mooney units and 85 Mooney units for particular embodiments of the rubber compositions disclosed herein or alternatively the Mooney viscosity may be between 55 Mooney units and 75 Mooney units, between 55 Mooney units and 70 Mooney units, between 60 Mooney units and 70 Mooney units or between 60 Mooney units and 80 Mooney units.

It may be noted that in particular embodiments of the rubber compositions, the polydispersity index is less than 2.5 or alternatively less than 2, between 1 and 2.5 or between 1 and 2. The polydispersity index is defined as the ratio of the weight average molecular weight (Mw) to the number average molecular weight (Mn). As is well known, the Mw and the Mn may be determined relative to polystyrene standards using gel permeation chromatography (GPC).

In particular embodiments it may be suitable to use a functionalized rubber, *i.e.,* one appended with active moieties. Such elastomers are well-known in the art and typically are functionalized with a moiety that interacts with the reinforcing filler. The elastomers may be functionalized by attaching these active moieties to the polymer backbone, along the branches of the polymer or at the branch ends of the polymer. Examples of functionalized elastomers include silanol or polysiloxane functionalized elastomers, examples of which may be found in US Patent No. 6,013,718, which is hereby fully incorporated by reference. Other examples of functionalized elastomers include those having alkoxysilane groups as described in US 5,977,238, carboxylic groups as described in US 6,815,473, polyether groups as described in US 6,503,973 or amino groups as described in US 6,800,582 and are all incorporated herein by reference. The functional groups are attached to the elastomers to provide interaction between the elastomer and the reinforcement filler. These functionalized elastomers are examples but any functional grouping that interacts with the carbon black of the rubber compositions disclosed herein may be useful.

In particular embodiments of the rubber compositions disclosed herein, the rubber components, such as the polybutadiene and/or at least one of the other rubber components, may be a functionalized elastomer having functional moieties attached to at least a portion of the total number of branch ends or along the branches of the polymer. Such functional moieties may include, for example, amino groups, silanol groups, tin groups, alkoxysilane groups, carboxylic groups or polyether groups. Particular embodiments include a functionalized polybutadiene as the only functionalized rubber component. Other embodiments include no functionalized elastomers.

Suitable polybutadienes are available on the market and may be obtained, for example, from Lanxess, having offices in Orange, Texas, and Nippon Zeon, having offices in Tokyo and manufacturing site in Singapore. For example Lanxess provides Buna CB 21, a solution high-*cis* BR having a Mooney viscosity of 73 and a cis-1,4 content of at least 96%. Buna CB 22 is a solution high-*cis* BR having a Mooney viscosity of 63 and a cis-1,4 content of at least 96%. Nipol® BR 1250H is an amine/Sn functionalized BR with a Mooney of -50 and cis-1,4 of 50%.

In addition to the polybutadiene, particular embodiments of the rubber compositions disclosed herein may include natural rubber and/or polyisoprene, a synthetic rubber. A mixture of polybutadiene with either natural rubber or polyisoprene or a mixture of natural rubber and polyisoprene is a preferred rubber component of the rubber compositions disclosed herein.

Therefore particular embodiments of the rubber compositions include 100 phr of a mixture of polybutadiene with natural rubber and/or polyisoprene. Such embodiments include between 20 phr and 80 phr of polybutadiene or alternatively between 30 phr and 70 phr, between 40 phr and 70 phr or between 50 phr and 70 phr of polybutadiene. Likewise such embodiments may include between 20 phr and 80 phr of the natural rubber and/or polyisoprene or between 30 phr and 70 phr or between 30 phr and 60 or between 30 phr and 50 phr of the natural rubber and/or polyisoprene.

Particular embodiments may include an additional rubber component in addition to the polybutadiene mixed with natural rubber and/or polyisoprene. Such embodiments may include up to 15 phr of an additional rubber component selected from butadiene copolymers, isoprene copolymers and mixtures thereof. Other embodiments may include between 0 phr and 10 phr or alternatively between 0 phr and 5 phr of such additional rubber component. Particular embodiments have no such additional rubber component.

The additional rubber component is a diene rubber, meaning that the component results at least in part, *i.e.,* a homopolymer of a copolymer, from diene monomers, *i.e.,* monomers having two double carbon-carbon bonds, whether conjugated or not.

These diene elastomers may be classified as either "essentially unsaturated" diene elastomers or "essentially saturated" diene elastomers. As used herein, essentially unsaturated diene elastomers are diene elastomers resulting at least in part from conjugated diene monomers, the essentially unsaturated diene elastomers having a content of such members or units of diene origin (conjugated dienes) that is at least 15 mol%. Within the category of essentially unsaturated diene elastomers are highly unsaturated diene elastomers, which are diene elastomers having a content of units of diene origin (conjugated diene) that is greater than 50 mol%.

Those diene elastomers that do not fall into the definition of being essentially unsaturated are, therefore, the essentially saturated diene elastomers. Such elastomers include, for example, butyl rubbers and copolymers of dienes and of alpha-olefins of the EPDM type. These diene elastomers have low or very low content of units of diene origin (conjugated dienes), such content being less than 15 mol%.

Examples of suitable conjugated dienes include, in particular, 1,3-butadiene, 2-methyl-1,3-butadiene, 2,3-di($C_1$-$C_5$ alkyl)-1,3-butadienes such as, 2,3-dimethyl-1,3-butadiene, 2,3-diethyl-1,3-butadiene, 2-methyl-3-ethyl-1,3-butadiene, 2-methyl-3-isopropyl-1,3-butadiene, an aryl-1,3-butadiene, 1,3-pentadiene and 2,4-hexadiene. Examples of vinylaromatic compounds include styrene, ortho-, meta- and para-methylstyrene, the commercial mixture "vinyltoluene", para-tert-butylstyrene, methoxystyrenes, chloro-styrenes, vinylmesitylene, divinylbenzene and vinyl naphthalene.

Examples of butadiene copolymers include butadiene/styrene copolymers, particularly those having a styrene content of between 1 wt% and 50 wt% or of between 20 wt% and 40 wt% and in the butadiene faction, a content of 1,2-bonds of between 4 mol% and 65 mol%, a content of trans-1,4 bonds of between 20 mol% and 80 mol%. Also included are butadiene/isoprene copolymers, particularly those having an isoprene content of between 5 wt% and 90 wt% and a glass transition temperature (Tg, measured in accordance with ASTM D3418) of -40° C to -80° C.

Examples of isoprene copolymers include isoprene/styrene copolymers, particularly those having a styrene content of between 1 wt. % and 50 wt. % and a Tg of between -25° C and -50° C. In the case of butadiene/styrene/isoprene copolymers, examples of those which are suitable include those having a styrene content of between 5 wt% and 50 wt% and more particularly between 10 wt% and 40 wt%, an isoprene content of between 15 wt% and 60 wt%, and more particularly between 20 wt% and 50 wt%, a butadiene content of between 5 wt% and 50 wt% and more particularly between 20 wt% and 40 wt%, a content of 1,2-units of the butadiene fraction of between 4 wt% and 85 wt%, a content of trans-1,4 units of the butadiene fraction of between 6 wt% and 80 wt%, a content of 1,2-plus 3,4-units of the isoprene fraction of between 5 wt% and 70 wt%, and a content of trans-1,4 units of the isoprene fraction of between 10 wt% and 50 wt%, and more generally any butadiene/styrene/isoprene copolymer having a Tg of between -20° C and -70° C.

The additional rubber component added in particular embodiments of the compositions disclosed herein is included, *inter alia,* to provide the necessary tack to the rubber composition. Use of a tackifying resin is limited or excluded from particular embodiments because such resins may raise the hysteresis of the rubber composition and increased hysteresis would raise the temperature of the insert under the run-flat running conditions, although some C5 aliphatic resins may increase tack without also increasing the hysteresis and may therefore be useful in particular embodiments. It may be noted that particular embodiments may contain only highly unsaturated elastomers with other types of elastomers being explicitly excluded.

In addition to the rubber, the rubber compositions disclosed herein further include a carbon black reinforcing filler. Reinforcing fillers are added to rubber compositions to, *inter alia,* improve their tensile strength and wear resistance. While some embodiments may benefit from limiting suitable carbon blacks to those having specific characteristics, other embodiments may include any suitable carbon black that is known to those skilled in the art.

High amounts of carbon black, particularly carbon blacks of fine particle sizes, increase the level of the hysteresis in a rubber composition so it is typically beneficial to use a black or blacks and their loadings that minimize the hysteretic properties of the rubber composition. For example, a sidewall support made from a material that is highly hysteretic will run hotter and, when the tire is in run-flat mode, fail as a result of the rubber decomposition resulting from the high temperature. However, the rubber compositions disclosed herein have a higher heat tolerance because of the dual curing system, *i.e.,* both sulfur and peroxide curing agents. Examples of useful carbon blacks may include N990, N774, N772, N762, N683, N660, N650, N550, N330, N326, S204, or any combination of these.

Carbon black may best be described as being made up of very fine particulate aggregates wherein the very fine particles are fused together to form the aggregates. The aggregates that are formed by these very fine particles can vary greatly between the different types of carbon blacks. Those blacks having aggregates that have a higher particle count with the particles joined into more chain-like clusters having a narrow core, often with random branching, are characterized as having a higher structure as compared to those in general having a lower particle count, less branched and more compact.

Common properties that are measured and are useful in describing a carbon black include surface area measurements, which are indicative of the particle size and the oil adsorption number (OAN) that is indicative of the structure of the carbon black. A similar test may be performed on a compressed sample of carbon black (COAN) that also provides an indication of the structure of the black.

One known method of determining the surface area of a carbon black is the ASTM Standard D6556 for determining the total and external surface area by nitrogen adsorption. A method for determining the oil adsorption number is the ASTM Standard D2414 using dibutyl phthalate while ASTM Standard D3493 is the standard test for determining the COAN of a carbon black.

Particular embodiments of the rubber compositions disclosed herein include a carbon black having a nitrogen surface area as determined using the ASTM Standard D6556 test method of between 5 $m^2/g$ and 100 $m^2/g$ or alternatively between 10 $m^2/g$ and 50 $m^2/g$, between 15 $m^2/g$ and 40 $m^2/g$, between 15 $m^2/g$ and 25 $m^2/g$ or between 17 $m^2/g$ and 22 $m^2/g$.

But in addition to having these surface areas, carbon blacks useful for particular embodiments of the rubber compositions disclosed herein may be characterized by their structure. Therefore, in addition to the ranges for the nitrogen surface areas, particular embodiments may include carbon blacks characterized as having an OAN as determined by ASTM D2414 of between 70 ml/100 g and 200 ml/100 g or alternatively between 100 ml/100 g and 150 ml/100 g, between 110 ml/100 g and 150 ml/100 g, between 120 ml/100 g and 150 ml/100 g, between 125 ml/100 g and 145 ml/100 g or between 130 ml/100 g and 140 ml/100 g.

Additionally particular embodiments of the rubber compositions disclosed herein may have the useful carbon blacks characterized as having a COAN as determined by ASTM D3493-09 of between 50 ml/100 g and 150 ml/100 g or alternatively between 65 ml/100 g and 85 ml/100 g or between 70 ml/100 g and 80 ml/100 g.

Useful carbon blacks for particular embodiments of the rubber compositions disclosed herein may be characterized as having a nitrogen surface area in a range as disclosed above and either a COAN in a range as described above or an OAN in a range as described above. In other particular embodiments, useful carbon blacks may be characterized as having each of the above characteristics, *i.e.,* nitrogen surface area, OAN and COAN, within one of the ranges as described above.

Surface activity of a carbon black may also be indicated by the difference between the nitrogen surface area and the iodine number (ASTM D1510). The iodine number is a measurement of the adsorption of iodine by the carbon black and is also used as a measure of the surface area. Higher activity blacks tend to have a positive difference while less active blacks tend to have a negative number. In particular embodiments, the useful carbon blacks may further include having an iodine number of between 10 mg/g and 50 mg/g or alternatively between 10 mg/g and 25 mg/g, between 15 mg/g and 23 mg/g or between 18 mg/g and 21 mg/g.

Particular embodiments of the rubber compositions disclosed herein may include between 30 phr and 75 phr of the carbon black or alternatively, between 35 phr and 60 phr, between 40 phr and 60 phr or between 45 phr and 60 phr of the carbon black.

An example of a suitable high-structure, low-surface area carbon black that is available on the market is S204, available from Orion Engineered Carbon with offices in Kingwood, Texas. This carbon black has a nitrogen surface area of 19 m$^2$/g, an OAN of 138 ml/100 g, a COAN of 76 ml/ 100 g and an iodine number of 19.6 mg/g.

In addition to the rubber components and the carbon black, the rubber compositions disclosed herein include both a sulfur curing agent and a peroxide curing agent. Both types of curing agents are well known but the surprisingly it has been found that a small addition of peroxide curing agent to the sulfur curing system provides a significantly improved rubber composition for the manufacture of run-flat sidewall supports and bead apexes.

Peroxide curing systems are well known in the art. Organic peroxides are useful as curing agents since they Particular embodiments of the present invention include an organic peroxide as part of the peroxide curing system, examples of which include di-cumyl peroxide; tert-butyl cumyl peroxide; 2,5-dimethyl-2,5 bis(tertbutyl peroxy)hexyne-3; bis(tert-butylperoxyisopropyl)benzene; 4,4-di-tert-butylperoxy N-butyl valerate; 1,1-di-tert-butylperoxy-3,3,5-trimethylcyclohexane; bis-(tert-butylperoxy)-di-isopropylbenzene; t-butyl perbenzoate; di-tert-butylperoxide; 2,5-dimethyl-2,5-di-tert-butylperoxide hexane, as well as other peroxides known to those having ordinary skill in the art and combinations thereof.

The amount of peroxide curing agents useful in the dual curing system that is part of the rubber compositions disclosed herein can surprisingly provide the improved rubber composition properties with the addition of just a small amount of the peroxide curing agent. The amount of peroxide curing agent added to the rubber compositions disclosed herein may, for particular embodiments, be between 0.2 phr and 3 phr of peroxide curing agent or alternatively between 0.2 phr and 2 phr, between 0.3 phr and 1.8 phr or between 0.5 phr and 1.5 phr of the peroxide curing agent.

Such amounts of peroxide curing agent may be a function of the total amount of curing agents added to the rubber compositions. Therefore the ratio of the peroxide curing agent to the sulfur curing agent may, for particular embodiments of the rubber compositions disclosed herein, be between 1:10 and 2:1, or alternatively between 1:5 and 2:1, between 1:5 and 1:2, between 1:4 and 1:3 or between 1:3 to 1:1.

Since some peroxide products are provided with a carrier, the amount of peroxide curing agent added to the rubber compositions is expressed only in terms of the amount of active peroxide curing agent, not the amount of a product with a carrier and its active ingredient.

In addition to the peroxide curing agent, a curing coagent may optionally be included with the peroxide curing agent in the curing package for particular embodiments of the rubber compositions disclosed herein. Coagents are known to sometimes affect the crosslinking efficiency in peroxide curing systems and may sometimes improve the properties of the cured rubber compositions. Particular embodiments of the rubber compositions disclosed herein include no curing coagent.

Such curing coagents are known to include both non-ionic and polar types. Non-ionic coagents are known to typically contribute to the state of the cure of the vulcanized rubber and form radicals typically through hydrogen abstraction. Examples of non-ionic coagents include, for example, allyl-containing cyanurates, isocyanurates and phthalates, homopolymers of dienes and copolymers of dienes and vinyl aromatics, such as triallyl cyanurates, triallyl isocyanurate, 90% vinyl polybutadiene and 70% vinyl styrene-butadiene copolymer. RICON 153 is available from Cray Valley (with offices in Exton, PA) and is 85% 1, 2 vinyl polybutadiene, a useful non-ionic coagent having a number average MW of 4700.

Polar coagents typically increase both the rate and state of the cure and form very reactive radicals through addition reactions. Examples of these polar coagents include multifunctional acrylate and methacrylate esters and dimaleimides, such as the zinc salts of acrylic and methacrylic acid, ethylene glycol diacrylate, trimethylolpropane triacrylate, trimethylolpropane trimethacrylate and N, N'-m-phenylene dimaleimides.

Typically, in those embodiments that may be suitable for use of such coagents, coagents may be added to particular embodiments of the rubber compositions disclosed herein in an amount of between 1 phr and 7 phr or alternatively, between 2 phr and 6 phr or between 3 phr and 5 phr. However, as noted above, particular embodiments of the rubber compositions disclosed herein include no curing coagents.

Sulfur curing systems are also well known in the art. Sulfur may be added to the rubber compositions or sulfur donating agents may provide the necessary sulfur for crosslinking. An accelerator is also provided for the curing system. Various activators or secondary accelerators, such as zinc oxide, stearic acid or equivalent compounds, or guanidine derivatives (in particular diphenylguanidine), may be incorporated into the rubber composition as the sulfur cure system.

The amount of sulfur may range between 0.5 phr and 5 phr or alternatively between 1 phr and 4 phr of sulfur. The form of the sulfur can be of "soluble" or "insoluble". The primary accelerator may be added in an amount of between 0.5 phr and 5 phr or alternatively between 1 phr and 4 phr.

As noted, the sulfur vulcanization system may include one or more accelerators, which are compounds capable of accelerating the curing of the diene elastomers in the presence of sulfur. Examples of such accelerators include accelerators of the thiazole type and their derivatives or accelerators of thiuram, or zinc dithiocarbamate types. These accelerators are chosen, for example, from the group consisting of 2-mercaptobenzothiazyl disulphide (abbreviated to "MBTS"), tetrabenzylthiuram disulphide ("TBZTD"), N-cyclohexyl-2-benzothiazolesulphenamide ("CBS"), N,N-dicyclohexyl-2-benzothiazole-sulphenamide ("DCBS"), N-tertbutyl-2-benzothiazolesulphenamide ("TBBS"), N-tert-butyl-2-benzothiazolesulphenimide ("TBSI"), zinc dibenzyldithiocarbamate ("ZBEC") and the mixtures of these compounds. As noted, a primary accelerator of the sulphenamide type is often used in the rubber compositions disclosed herein.

In addition to the rubber components, the carbon black reinforcing filler and the curing system, additional components may be added to the rubber compositions as are well known to those skilled in the art. For example various processing aids, antidegradants, antioxidants or combinations thereof in quantities as known to those having ordinary skill in the art may be added to the rubber compositions.

Flexometer measurements are useful for determining whether the certain materials may be useful for the manufacture of run-flat sidewall inserts. Using a flexometer in accordance with ASTM D623 (Heat Generation and Flexing Fatigue in Compression), the internal temperature and percent creep of the test piece subjected to repeated compression over the test cycle may be measured. If the test piece failed (blowout) from the repeated compression before the end of the predefined testing time, *e.g.,* 1 hour, a flex inner temperature was not taken. For particular embodiments of the materials disclosed herein and with similar modulus of elongation as disclosed herein, the materials may be characterized as having a percent creep (tested in accordance with the test conditions below) of less than 10 % or alternatively, less than 5 %, less than 4 % or less than 3 %. The test conditions pertaining to the flexometer are disclosed below along with the other testing procedures.

The rubber compositions that are disclosed herein may be produced in suitable mixers, such as internal mixers or extruders, in a manner known to those having ordinary skill in the art. Typically two successive preparation phases may be utilized, a first phase of thermo-mechanical working at a high temperature followed by a second phase of mechanical working at a lower temperature.

The first phase of thermo-mechanical working (sometimes referred to as the "non-productive" phase) is intended to mix thoroughly, by kneading, the various ingredients of the compositions with the exception of the vulcanization system, particularly the vulcanizing agents. It is carried out in a suitable mixer until, under the action of the mechanical working and the high shearing imposed on the mixture, a maximum temperature is reached, generally between 120 °C and 190 °C or more narrowly, between 130 °C and 170 °C.

After cooling the mixture, a second phase of mechanical working is implemented at a lower temperature. Sometimes referred to as the "productive" phase, this finishing phase consists of incorporation by mixing the vulcanization system, in a suitable device such as an open mill. It is performed for an appropriate time, typically between one and thirty minutes, for example between two and ten minute, and at a sufficiently low temperature lower than the vulcanization temperature of the mixture so as to protect against premature vulcanization.

After the mixing is complete, the rubber composition can be formed into useful articles, including the sidewall supports of run-flat tires. After being formed into its initial shape for being incorporated into the tire and then being incorporated into the tire during the tire building process, the tire is then cured, typically under heat and pressure, to produce the run-flat tire product having a sidewall support insert.

The invention is further illustrated by the following examples, which are to be regarded only as illustrations and not delimitative of the invention in any way. The properties of the compositions disclosed in the examples were evaluated as described below and those utilized methods are suitable for measurement of the claimed and/or described properties of the present invention.

Mooney Viscosity ML (1+4): Mooney Viscosity was measured in accordance with ASTM Standard D1646-04. In general, the composition in an uncured state is placed in a cylindrical enclosure and heated to 100°C. After 1 minute of preheating, the rotor turns within the test sample at 2 rpm, and the torque used for maintaining this movement is measured after 4 minutes of rotation. The Mooney Viscosity is expressed in "Mooney units."

Modulus of elongation (MPa) was measured at 10 % (MA10) and at 100 % (MA100) at a temperature of 23 °C based on ASTM Standard D412 on dumb bell test pieces. The measurements were taken in the second elongation, *i.e.,* after an accommodation cycle. These measurements are secant moduli in MPa based on the original cross section of the test piece.

Hysteresis losses were measured in percent by rebound at 60 °C at the sixth impact in accordance with the following equation:

$$HL(\%) = 100\{(W_0 - W_1)/W_1\},$$

wherein $W_0$ is the energy supplied and $W_1$ is the energy restored.

The elongation property was measured as elongation at break (%) and the corresponding elongation stress (MPa), which is measured at 23 °C in accordance with ASTM Standard D412 on ASTM C test pieces.

Flexometer measurements were taken using a DOLI Ultimate Flexometer manufactured by DOLI Industrie Electronik GMBH of Germany following ASTM test method D-623 (Heat Generation and Flexing Fatigue in Compression) on test pieces that were 25 mm in height with a 17.8 mm diameter. Before the test was run, the sample was preheated in the chamber at 110 °C for 15 minutes. The test was run for one hour at which time an internal temperature of the test piece was recorded as the flex inner temperature. If the test piece failed (blowout) from the repeated compression before the end of the one hour, a flex inner temperature was not taken. The test was run with a chamber temperature of 110 °C, with a pre-stress of 2 MPa applied and a stroke of 25 % (6.25 mm) at a frequency of 30 Hz. The difference in height of the test piece at the beginning of the test and at the end of the test expressed as a percent of the original height is the flex percent creep.

The invention is further illustrated by the following examples, which are to be regarded only as illustrations and not delimitative of the invention in any way.

Example **1**

This example demonstrates the improved physical properties of the rubber composition that has both a peroxide and a sulfur curing component. Rubber compositions were prepared using the components shown in Table **1.** The amount of each component making up the rubber compositions shown in Table **1** are provided in parts per hundred parts of rubber by weight (phr).

The BR was an amine functionalized rubber supplied by Nippon Zeon in Singapore with low cis-1,4 bonds, about 50%. The processing oil was a naphthenic oil provided by Safety Kleen in Chicago, IL. The tackifying resin was supplied by Exxon-Mobil in Baton Rouge, LA. The witness formulation W**1** was cured just with sulfur while the inventive formulation F**1** was cured with a combination of sulfur and the peroxide VULCUP (bis-(tert-butylperoxy)-di-isopropylbenzene) CAS number 2515525-3 available from Arkema.

Table **1** - Rubber Formulations

| Formulations | W1 | F1 |
|---|---|---|
| NR | 40 | 40 |
| BR | 60 | 60 |
| S204 CB | 55 | 55 |
| Oil | 3 | 3 |
| Tack Resin | 3 | 3 |
| Antidegradants | 5 | 2 |
| TBBS | 3.5 | 3.5 |
| Sulfur | 2.4 | 2.4 |
| Stearic Acid and ZnO | 5 | 5 |
| Vulcup Peroxide | | 1.2 |
| Ratio of Peroxide/Sulfur | | 0.5 |

In practice, the Vulcup was added as a bloc form with 40% active chemical, and Table **1** only shows the amount of the active peroxide that was added. The antidegradants included TMQ and 6PPD though the inventive formulation F**1** included no 6PPD.

The rubber compositions were prepared in a Banbury mixer by mixing the components given in Table **1,** except for the cure package, in a mixer until all components were well dispersed and a temperature of between 130 °C and 170 °C was reached. The cure package was added in a second phase on a mill. Curing was effected at 150 °C for fifteen minutes for W**1** and for thirty minutes for F**1**. The peroxide takes longer to cure since the half-life of the peroxide is about 30 minutes at 150 °C. The rubber compositions were then prepared for testing and tested to measure their physical properties, the results of which are shown in Table **2.**

Table **2** - Rubber Formulations Physical Properties

| Physical Properties | W1 | F1 |
|---|---|---|
| MA10 @23 °C | 6.6 | 7.2 |
| MA50 @23 °C | 4.6 | 4.9 |
| MA100 @ 23 °C | 4.2 | 4.9 |
| Hysteresis Loss, % rebound | 7.3 | 7.5 |
| Elongation Force @ 23 °C, MPa | 13 | 13 |
| Elongation Break @ 23 °C, % | 249 | 228 |
| Flex Creep, % | 4.5 | 1.6 |
| Flex sample internal temp, °C | 146 | 151 |

As can be seen from the test results in Table **2,** the flex creep was significantly improved when the rubber composition was cured with a combination of both sulfur and peroxide curing agent. It should also be noted that the internal temperature was much higher in the F**1** formulation even though it has significantly less creep, an indication that it will be able to travel much further with a sidewall insert formed of that composition rather than the W**1** composition.

The terms "comprising," "including," and "having," as used in the claims and specification herein, shall be considered as indicating an open group that may include other elements not specified. The term "consisting essentially of," as used in the claims and specification herein, shall be considered as indicating a partially open group that may include other elements not specified, so long as those other elements do not materially alter the basic and novel characteristics of the claimed invention. The terms "a," "an," and the singular forms of words shall be taken to include the plural form of the same words, such that the terms mean that one or more of something is provided. The terms "at least one" and "one or more" are used interchangeably. The term "one" or "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (not required) feature of the invention. Ranges that are described as being "between a and b" are inclusive of the values for "a" and "b."

It should be understood from the foregoing description that various modifications and changes may be made to the embodiments of the present invention without departing from its true spirit. The foregoing description is provided for the purpose of illustration only and should not be construed in a limiting sense. Only the language of the following claims should limit the scope of this invention.

## Claims

1. A run-flat tire having a sidewall support and a bead apex, the sidewall support and/or the bead apex manufactured from a rubber composition that is based upon a cross-linkable rubber composition, the cross-linkable rubber composition comprising, per 100 parts by weight of rubber (phr):

   a rubber component selected from the group consisting of a polybutadiene and at least one of a natural rubber and a polyisoprene;
   a carbon black reinforcing filler; and
   a sulfur curing agent and a peroxide curing agent.

2. The run-flat tire of claim 1, wherein the cross-linkable elastomer composition comprises between 30 phr and 75 phr of the carbon black.

3. The run-flat tire of claim 2, wherein the cross-linkable elastomer composition comprises between 35 phr and 60 phr of the carbon black.

4. The fun-flat tire of any of the preceding claims, wherein the carbon black is a low-surface area, high-structure carbon black having a nitrogen surface area of between 15 m²/g and 25 m²/g and a COAN of between 65 ml/100 g and 85 ml/100 g.

5. The run-flat tire of any of the preceding claims, wherein an OAN of the low-surface area, high-structure carbon black is between 100 ml/100 g and 150 ml/100 g.

6. The run-flat tire of any of the preceding claims, wherein an iodine number of the low-surface area, high-structure carbon black is between 10 mg/g and 25 mg/g.

7. The run-flat tire of any of the preceding claims, wherein the cross-linkable rubber composition comprises between 0 phr and 15 phr of an additional rubber component selected from the group consisting of a butadiene copolymer, an isoprene copolymer and mixtures of these elastomers.

8. The run-flat tire of any of the preceding claims, wherein cross-linkable rubber composition comprises 100 phr of the rubber component.

9. The run-flat tire of any of the preceding claims, wherein the rubber component includes between 20 phr and 80 phr of the polybutadiene.

10. The run-flat tire of any of the preceding claims, wherein the cross-linkable rubber composition comprises between 0.2 phr and 3 phr of the peroxide curing agent and between 0.5 phr and 5 phr of the sulfur curing agent.

11. The run-flat tire of any of the preceding claims, wherein the cross-linkable rubber composition includes no curing coagent of the peroxide curing agent.

12. The run-flat tire of any of the preceding claims, wherein the polybutadiene is functionalized with a moiety that interacts with the carbon black.

13. The fun-flat tire of claim 12, wherein the moiety includes an amine group.

14. The run-flat tire of any of the preceding claims, wherein only the sidewall support is manufactured from the rubber composition.

15. The run-flat tire of any of claims 1 through 11, wherein only the bead apex is manufactured from the rubber composition

## Patentansprüche

1. Reifen mit Notlaufeigenschaften mit einem Seitenwandträger und einem Wulstkern, der Seitenwandträger und/oder der Wulstkern sind aus einer Gummimischung hergestellt, die auf einer vernetzbaren Gummizusammensetzung beruht, wobei die vernetzbare Gummizusammensetzung pro 100 Gewichtsteile Gummi (phr) umfasst:

   eine Gummikomponente, die aus der Gruppe bestehend aus einem Polybutadien und mindestens einer Komponente aus einem Naturkautschuk und einem Polyisopren ausgewählt wird;
   einen Rußverstärkungsfüllstoff; und
   ein Schwefel-Vulkanisierungsmittel und ein Peroxid-Vulkanisierungsmittel.

2. Reifen mit Notlaufeigenschaften nach Anspruch 1, wobei die vernetzbare Elastomerzusammensetzung zwischen 30 phr und 75 phr Ruß umfasst.

**3.** Reifen mit Notlaufeigenschaften nach Anspruch 2, wobei die vernetzbare Elastomerzusammensetzung zwischen 35 phr und 60 phr Ruß umfasst.

**4.** Reifen mit Notlaufeigenschaften nach einem der vorhergehenden Ansprüche, wobei der Ruß ein Ruß mit geringer Oberfläche und hoher Struktur mit einer Stickstoffoberfläche zwischen 15 m$^2$/g und 25 m$^2$/g und einem COAN-Wert (Ölabsorptionszahl der komprimierten Probe) zwischen 65 ml/100 g und 85 ml/100 g ist.

**5.** Reifen mit Notlaufeigenschaften nach einem der vorhergehenden Ansprüche, wobei eine OAN (Ölabsorptionszahl) des Rußes mit geringer Oberfläche und hoher Struktur zwischen 100 ml/100 g und 150 ml/100 g liegt.

**6.** Reifen mit Notlaufeigenschaften nach einem der vorhergehenden Ansprüche, wobei eine Jodzahl des Rußes mit geringer Oberfläche und hoher Struktur zwischen 10 mg/g und 25 mg/g liegt.

**7.** Reifen mit Notlaufeigenschaften nach einem der vorhergehenden Ansprüche, wobei die vernetzbare Gummizusammensetzung zwischen 0 phr und 15 phr einer zusätzlichen Gummikomponente umfasst, die aus der Gruppe bestehend aus einem Butadien-Copolymer, einem Isopren-Copolymer und Mischungen dieser Elastomere ausgewählt wird.

**8.** Reifen mit Notlaufeigenschaften nach einem der vorhergehenden Ansprüche, wobei die vernetzbare Gummizusammensetzung 100 phr der Gummikomponente umfasst.

**9.** Reifen mit Notlaufeigenschaften nach einem der vorhergehenden Ansprüche, wobei die Gummikomponente zwischen 20 phr und 80 phr Polybutadien umfasst.

**10.** Reifen mit Notlaufeigenschaften nach einem der vorhergehenden Ansprüche, wobei die vernetzbare Gummizusammensetzung zwischen 0,2 phr und 3 phr Peroxid-Vulkanisierungsmittel und zwischen 0,5 phr und 5 phr Schwefel-Vulkanisierungsmittel umfasst.

**11.** Reifen mit Notlaufeigenschaften nach einem der vorhergehenden Ansprüche, wobei die vernetzbare Gummizusammensetzung kein Härtungscoagenz des Peroxid-Vulkanisierungsmittels enthält.

**12.** Reifen mit Notlaufeigenschaften nach einem der vorhergehenden Ansprüche, wobei das Polybutadien mit einem Anteil funktionalisiert ist, der mit dem Ruß wechselwirkt.

**13.** Reifen mit Notlaufeigenschaften nach Anspruch 12, wobei der Anteil eine Amingruppe enthält.

**14.** Reifen mit Notlaufeigenschaften nach einem der vorhergehenden Ansprüche, wobei nur die Seitenwandstütze aus der Gummizusammensetzung hergestellt wird.

**15.** Reifen mit Notlaufeigenschaften nach einem der Ansprüche 1 bis 11, wobei nur der Wulstkern aus der Gummizusammensetzung hergestellt wird.

**Revendications**

**1.** Pneumatique à affaissement limité ayant un support de flanc et un sommet de talon, le support de flanc et/ou le sommet de talon étant fabriqués à partir d'une composition de caoutchouc qui est basée sur une composition de caoutchouc réticulable, la composition de caoutchouc réticulable comprenant, pour 100 parties en poids de caoutchouc (phr) :

un composant de caoutchouc sélectionné dans le groupe se composant d'un polybutadiène et d'au moins l'un parmi un caoutchouc naturel et un polyisoprène ;
une charge de renforcement de noir de carbone ; et
un agent de vulcanisation au soufre et un agent de vulcanisation au peroxyde.

**2.** Pneumatique à affaissement limité selon la revendication 1, dans lequel la composition d'élastomère réticulable comprend entre 30 phr et 75 phr de noir de carbone.

**3.** Pneumatique à affaissement limité selon la revendication 2, dans lequel la composition d'élastomère réticulable comprend entre 35 phr et 60 phr de noir de carbone.

**4.** Pneumatique à affaissement limité selon l'une quelconque des revendications précédentes, dans lequel le noir de carbone est un noir de carbone à faible aire de surface et à haute structure ayant une aire de surface d'azote entre 15 m$^2$/g et 25 m$^2$/g et un COAN entre 65 ml/100 g et 85 ml/100 g.

**5.** Pneumatique à affaissement limité selon l'une quelconque des revendications précédentes, dans lequel un OAN du noir de carbone à faible aire de surface et à haute structure est entre 100 ml/100 g et 150 ml/100 g.

**6.** Pneumatique à affaissement limité selon l'une quelconque des revendications précédentes, dans lequel un indice d'iode du noir de carbone à faible aire de surface et à haute structure est entre 10 mg/g et 25 mg/g.

7. Pneumatique à affaissement limité selon l'une quelconque des revendications précédentes, dans lequel la composition de caoutchouc réticulable comprend entre 0 phr et 15 phr d'un composant de caoutchouc supplémentaire sélectionné dans le groupe se composant d'un copolymère de butadiène, d'un copolymère d'isoprène et de mélanges de ces élastomères.

8. Pneumatique à affaissement limité selon l'une quelconque des revendications précédentes, dans lequel la composition de caoutchouc réticulable comprend 100 phr du composant de caoutchouc.

9. Pneumatique à affaissement limité selon l'une quelconque des revendications précédentes, dans lequel le composant de caoutchouc inclut entre 20 phr et 80 phr du polybutadiène.

10. Pneumatique à affaissement limité selon l'une quelconque des revendications précédentes, dans lequel la composition de caoutchouc réticulable comprend entre 0,2 phr et 3 phr de l'agent de vulcanisation au peroxyde et entre 0,5 phr et 5 phr de l'agent de vulcanisation au soufre.

11. Pneumatique à affaissement limité selon l'une quelconque des revendications précédentes, dans lequel la composition de caoutchouc réticulable n'inclut pas de coagent de vulcanisation de l'agent de vulcanisation au peroxyde.

12. Pneumatique à affaissement limité selon l'une quelconque des revendications précédentes, dans lequel le polybutadiène est fonctionnalisé avec une fraction qui interagit avec le noir de carbone.

13. Pneumatique à affaissement limité selon la revendication 12, dans lequel la fraction inclut un groupe amine.

14. Pneumatique à affaissement limité selon l'une quelconque des revendications précédentes, dans lequel uniquement le support de flanc est fabriqué à partir de la composition de caoutchouc.

15. Pneumatique à affaissement limité selon l'une quelconque des revendications 1 à 11, dans lequel uniquement le sommet de talon est fabriqué à partir de la composition de caoutchouc.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6022434 A
- US 6013718 A
- US 5977238 A
- US 6815473 B
- US 6503973 B
- US 6800582 B

**Non-patent literature cited in the description**

- *CHEMICAL ABSTRACTS,* 2515525-3